# EUROPÄISCHE PATENTSCHRIFT

(11) **EP 2 843 096 B1**
(45) Veröffentlichungstag und Bekanntmachung des Hinweises auf die Patenterteilung: **13.01.2016**
(21) Anmeldenummer: 13182587.9
(22) Anmeldetag: 02.09.2013
(51) Int. Cl.: D04H 1/74, B29C 70/20, D04H 3/04

(54) **Verfahren und Vorrichtung zum Erzeugen eines Geleges**
Method and device for creating a filament layer
Procédé et dispositif destinés à produire une structure

(43) Veröffentlichungstag der Anmeldung: 04.03.2015
(73) Patentinhaber: Karl Mayer Malimo Textilmaschinenfabrik GmbH, 09117 Chemnitz (DE)
(72) Erfinder: Leimcke, Tobias, 09114 Chemnitz (DE); Heinecke, Thomas, 09117 Chemnitz (DE)
(74) Vertreter: Knoblauch, Andreas

(56) Entgegenhaltungen:
- EP-A1- 0 740 996
- EP-A1- 2 003 232
- EP-A1- 2 033 754
- EP-A1- 2 151 517
- DE-A1-102009 042 384
- US-A1- 2002 123 819
- US-B1- 6 585 842

## Beschreibung

Die Erfindung betrifft ein Verfahren zum Erzeugen eines Geleges, bei dem man mehrere Bahnabschnitte nebeneinander auf einer Fördereinrichtung ablegt, die sich zumindest zeitweilig in eine Transportrichtung bewegt, wobei die Transportrichtung mit einer Bandrichtung einen vorbestimmten Winkel einschließt, wobei jeder Randabschnitt eine in Bandrichtung verlaufende Vorderkante und eine in Bandrichtung verlaufende Hinterkante aufweist und man die Bandabschnitte so ablegt, dass die Hinterkante eines ersten Bandabschnitts und die Vorderkante eines zweiten Bandabschnitts benachbart sind.

Ferner betrifft die Erfindung eine Vorrichtung zum Erzeugen eines Geleges mit einer in eine Transportrichtung bewegbaren Fördereinrichtung, einer Bandabschnittzuführeinrichtung und einem Leger, der Bandabschnitte aus der Bandabschnittzuführeinrichtung entnimmt, in einer Bandrichtung, die mit der Transportrichtung einen vorbestimmten Winkel einschließt, über die Fördereinrichtung führt und auf der Fördereinrichtung in Transportrichtung nebeneinander ablegt.

Ein derartiges Verfahren und eine derartige Vorrichtung sind beispielsweise aus EP 2 151 517 A1 bekannt. Dort hat man festgestellt, dass die Bandabschnitte nicht alle die gleiche Breite aufweisen, also nicht die gleiche Erstreckung in Transportrichtung. Um dennoch einen gewünschten Aufbau des Geleges erzielen zu können, hat man daher vorgesehen, die Breite eines jeden Bandabschnitts zu ermitteln und die Geschwindigkeit des Legers, der die Bandabschnitte über die Fördereinrichtung führt und auf der Fördereinrichtung ablegt, so zu steuern, dass die kontinuierlich bewegte Fördereinrichtung den zuvor abgelegten Bandabschnitt genau so weit transportiert hat, dass das nächste Band an der gewünschten Position abgelegt werden kann. An der gewünschten Position können die beiden benachbarten Bandabschnitte Kante an Kante liegen oder sie können sich in vorbestimmter Weise überlappen oder eine vorbestimmte Lücke zueinander aufweisen.

Allerdings hat es sich herausgestellt, dass auch mit der Messung der Breite der vorbestimmte Aufbau des Geleges nicht immer in gewünschtem Maße erzielt werden kann.

Der Erfindung liegt die Aufgabe zugrunde, einen vorbestimmten Aufbau eines Geleges möglichst genau zu erreichen.

Diese Aufgabe wird bei einem Verfahren der eingangs genannten Art dadurch gelöst, dass man einen Hinterkantenverlauf des ersten Bandabschnitts und einen Vorderkantenverlauf des zweiten Bandabschnitts ermittelt und den zweiten Bandabschnitt relativ zum ersten Bandabschnitt in Abhängigkeit von einer Beziehung zwischen dem Vorderkantenverlauf und dem Hinterkantenverlauf auf der Fördereinrichtung ablegt.

Bei dieser Lösung wird berücksichtigt, dass die Bandabschnitte sich nicht nur insgesamt in ihrer Breite unterscheiden können, sondern auch über ihre Länge eine sich verändernde Breite aufweisen können. Mit anderen Worten ist die Breite eines Bandabschnitts über seine Länge nicht unbedingt konstant. Die Vorderkante und die Hinterkante sind dementsprechend in vielen Fällen auch nicht als gerade Linien ausgebildet, sondern weisen Wellungen, Unregelmäßigkeiten oder Störstellen auf. Diese Abweichungen von einer Geraden, die parallel zur Bandrichtung verläuft, können berücksichtigt werden, wenn man den Kantenverlauf der Vorderkante und der Hinterkante ermittelt.

Bei der Erfindung bestehen die Bandabschnitte aus im Wesentlichen parallel ausgerichteten Fasern oder Filamenten, die in Bandrichtung verlaufen. Diese Fasern oder Filamente sind vorzugsweise Kohlefasern, die praktisch keine Dehnung aufweisen. Dementsprechend bewirken bereits kleine Spannungsunterschiede an den Kanten Unregelmäßigkeiten, die sich in einer Abweichung des Verlaufs der entsprechenden Kante von einer Gerade äußern. Wenn man nun den Verlauf der Kante ermittelt, dann kann man diese Unregelmäßigkeiten ermitteln und berücksichtigen.

Die Berücksichtigung des Vorderkantenverlaufs und des Hinterkantenverlaufs richtet sich nach dem gewünschten Aufbau des Geleges. So kann man beispielsweise vorgeben, dass zwischen der Hinterkante des ersten Bandabschnitts und der Vorderkante des zweiten Bandabschnitts keinerlei Lücken vorhanden sein dürfen. In diesem Fall nimmt man in Kauf, dass sich bestimmte Bereiche der Bahnabschnitte überlappen. Eine andere Möglichkeit besteht darin, vorzugeben, dass die beiden Bandabschnitte keinerlei Überlappungen aufweisen können. In diesem Fall nimmt man in Kauf, dass sich zwischen benachbarten Bandabschnitten Lücken ergeben. In einer dritten, bevorzugten Vorgehensweise minimiert man die Lücken und die Überlappungsbereiche zwischen den beiden benachbarten Bandabschnitten. Dies lässt sich vereinfacht beispielsweise dadurch darstellen, dass die Größe der Überlappungsbereiche mit der Größe der Lückenbereiche zwischen den beiden benachbarten Bandabschnitten übereinstimmt.

Vorzugsweise ermittelt man den Vorderkantenverlauf und/oder den Hinterkantenverlauf als Differenz zu einer in Bandrichtung verlaufenden Linie. Dies vereinfacht die Ermittlungen ganz erheblich. Die Unregelmäßigkeiten oder Störstellen an den Kanten des Bandabschnitts sind in der Regel nicht allzu groß. Sie liegen normalerweise im Bereich von Millimetern und sind vielfach sogar kleiner als 1 mm. Dementsprechend kann man die in Bandrichtung verlaufende virtuelle Linie so legen, dass sich immer nur relativ kleine Differenzen zu dieser Linie ergeben.

Bevorzugterweise ermittelt man den Vorderkantenverlauf und/oder den Hinterkantenverlauf jeweils in Form von Stützstellen. Dabei macht man sich die Erkenntnis zu Nutze, dass Unregelmäßigkeiten oder Störstellen an den Kanten des Bahnabschnitts in der Regel nicht als Sprungstellen auftreten, sondern sich in fließenden Übergängen äußern. Man kann daher den Verlauf der Vorderkante und/oder der Hinterkante durch eine Abfolge von Punkten angeben, so dass die zu verarbeitende Menge an Daten klein bleibt.

Bevorzugterweise ermittelt man die Stützstelle an der Vorderkante und an der Hinterkante jeweils an gleichen Positionen in eine Richtung quer zur Transportrichtung. Dies hat den Vorteil, dass man bei einer späteren Auswertung des Vorderkantenverlaufs und des Hinterkantenverlaufs Messwerte zur Verfügung hat, die sich jeweils auf die gleiche Position quer zur Transportrichtung beziehen. Dementsprechend sind keine Interpolationen oder Umrechnungen erforderlich, sondern man kann die Messwerte unmittelbar für die Berechnung der gewünschten Ablage verwenden.

Vorzugsweise verwendet man als Beziehung eine minimale Flächendifferenz zwischen dem Vorderkantenverlauf und dem Hinterkantenverlauf. Dies kann man beispielsweise dadurch realisieren, dass man eine virtuelle Hinterkante des ersten Bandabschnitts so legt, dass die Fläche zwischen der realen Hinterkante und der virtuellen Hinterkante gleich Null wird, wobei Flächenbereiche auf einer Seite der virtuellen Hinterkante negativ und auf der anderen Seite positiv zählen. Die gleiche Vorgehensweise wendet man bei der Vorderkante des zweiten Bandabschnitts an. Hier wird eine virtuelle Vorderkante so gelegt, dass sich mit der realen Vorderkante eine Flächendifferenz von Null ergibt. Die beiden Bandabschnitte werden dann so positioniert, dass die virtuelle Hinterkante und die virtuelle Vorderkante übereinstimmen.

Bevorzugterweise ermittelt man den Vorderkantenverlauf und/oder den Hinterkantenverlauf beim Führen des Bandabschnitts über die Fördereinrichtung. Dementsprechend kann man für die Ermittlung des Verlaufs der Vorderkante und für die Ermittlung des Verlaufs der Hinterkante einen relativ kleinen Sensor verwenden, der nicht viel Bauraum beansprucht. Die Vorderkante und die Hinterkante werden dann über die Sensoren hinweggeführt, die dabei den Verlauf ermitteln können. Man benötigt also auch keine zusätzliche Zeit für das Ermitteln der Kantenverläufe.

Vorzugsweise ermittelt man den Vorderkantenverlauf und den Hinterkantenverlauf eines Bandabschnitts gleichzeitig und speichert zumindest einen Verlauf davon zeitweilig. Wenn man einen Bandabschnitt zur Fördereinrichtung hin bewegt, kann man den Vorderkantenverlauf und den Hinterkantenverlauf gleichzeitig ermitteln. Allerdings wird zur Positionierung des Bandabschnitts hier nur der Vorderkantenverlauf benötigt, weil dieser mit dem Hinterkantenverlauf eines bereits abgelegten Bandabschnitts in Beziehung gesetzt werden muss. Der Hinterkantenverlauf wird daher gespeichert und beim Ablegen des nächsten Bandabschnitts verwendet. Der Vorderkantenverlauf und der Hinterkantenverlauf eines einzelnen Bandabschnitts werden also nicht gleichzeitig ausgewertet.

Die Aufgabe wird bei einer Vorrichtung der eingangs genannten Art dadurch gelöst, dass eine Vorderkantenverlaufsmessvorrichtung, die einen Vorderkantenverlauf eines Bandabschnitts ermittelt, und eine Hinterkantenverlaufsmessvorrichtung, die einen Hinterkantenverlauf eines Bandabschnitts ermittelt, mit einer Antriebssteuerung verbunden sind, die eine Bewegung der Fördereinrichtung und/oder eine Bewegung des Legers in Abhängigkeit von einer Beziehung zwischen dem Vorderkantenverlauf und dem Hinterkantenverlauf steuert.

Wie oben im Zusammenhang mit dem Verfahren ausgeführt, kann man auf diese Weise berücksichtigen, dass die Breite eines Bandabschnitts über die Länge dieses Bandabschnitts durchaus schwanken kann. Aus diesem Grunde ist die Ermittlung der Breite des Bandabschnitts oder eines zuvor abgelegten Bandabschnitts nicht ausreichend, um eine Positionierung des abzulegenden Bandabschnitts so zu bewirken, dass der gewünschte Aufbau des Geleges entsteht. Wenn man jedoch den Verlauf der Hinterkante eines abgelegten Bandabschnitts und den Verlauf der Vorderkante eines neu abzulegenden Bandabschnitts miteinander in Beziehung setzt, dann lässt sich der Aufbau des Geleges in einem hohen Maße an den gewünschten oder vorbestimmten Aufbau anpassen.

Vorzugsweise sind die Vorderkantenverlaufsmessvorrichtung und/oder die Hinterkantenverlaufsmessvorrichtung zwischen der Bandabschnittzuführeinrichtung und der Fördereinrichtung angeordnet. Hier steht in der Regel genügend Bauraum zur Verfügung. Die beiden Kanten des Bandabschnitts können dann beim Führen des Bandabschnitts von der Bandabschnittzuführeinrichtung zur Fördereinrichtung über die beiden Messvorrichtungen geführt werden, so dass beim Führen oder Transportieren des Bandabschnitts von der Bandabschnittszuführeinrichtung zur Fördereinrichtung automatisch der Vorderkantenverlauf und/oder der Hinterkantenverlauf ermittelt werden kann.

Vorzugsweise sind die Vorderkantenverlaufsmessvorrichtung und/oder die Hinterkantenverlaufsmessvorrichtung als berührungslos arbeitende Messvorrichtung ausgebildet. Damit vermeidet man eine zusätzliche Störung des Verlaufs der Vorderkante und/oder der Hinterkante. Die Vorderkante und die Hinterkante werden mechanisch nicht beeinflusst. Als berührungslos arbeitende Messvorrichtung kann man eine optische Messvorrichtung, beispielsweise eine Zeilenkamera, eine elektrische Messvorrichtung oder eine ähnliche Vorrichtung verwenden.

Bevorzugterweise ist die Vorderkantenverlaufsmessvorrichtung und/oder die Hinterkantenverlaufsmessvorrichtung mit einer Speichereinrichtung verbunden. Die Speichereinrichtung kann den Verlauf der Vorderkante und/oder der Hinterkante zumindest zeitweilig speichern, so dass man gleichzeitig den Verlauf der Hinterkante eines ersten Bandabschnitts und den Verlauf der Vorderkante eines zweiten Bandabschnitts zur Verfügung hat, auch wenn diese beiden Verläufe zeitlich versetzt ermittelt werden. Man muss also die Verläufe von Vorderkante und Hinterkante eines Bandabschnitts nicht gleichzeitig auswerten.

Vorzugsweise sind die Vorderkantenverlaufsmessvorrichtung und/oder die Hinterkantenverlaufsmessvorrichtung in Transportrichtung verstellbar. Damit lässt sich auf einfache Weise eine Anpassung an unterschiedliche Nennbreiten der Bandabschnitte vornehmen. Normalerweise kann man davon ausgehen, dass die zugeführten Bandabschnitte ein gewisses Nennmaß aufweisen, auf das eine oder beide Messvorrichtungen eingestellt werden können. Wenn sich dieses Nennmaß ändert, dann kann man eine oder beide Verlaufsmessvorrichtungen so verstellen, dass sie nach wie vor den Kantenverlauf ermitteln können. Dementsprechend kann man relativ kleine Kantenverlaufsmessvorrichtungen verwenden, die zudem kostengünstig sind.

Die Erfindung wird im Folgenden anhand eines bevorzugten Ausführungsbeispiels in Verbindung mit der Zeichnung beschrieben. Hierin zeigen:
- Fig. 1: eine stark schematisierte Darstellung einer Vorrichtung zum Erzeugen eines Geleges und
- Fig. 2: eine stark schematisierte Darstellung eines Verlaufs einer Vorderkante und eines Verlaufs einer Hinterkante.

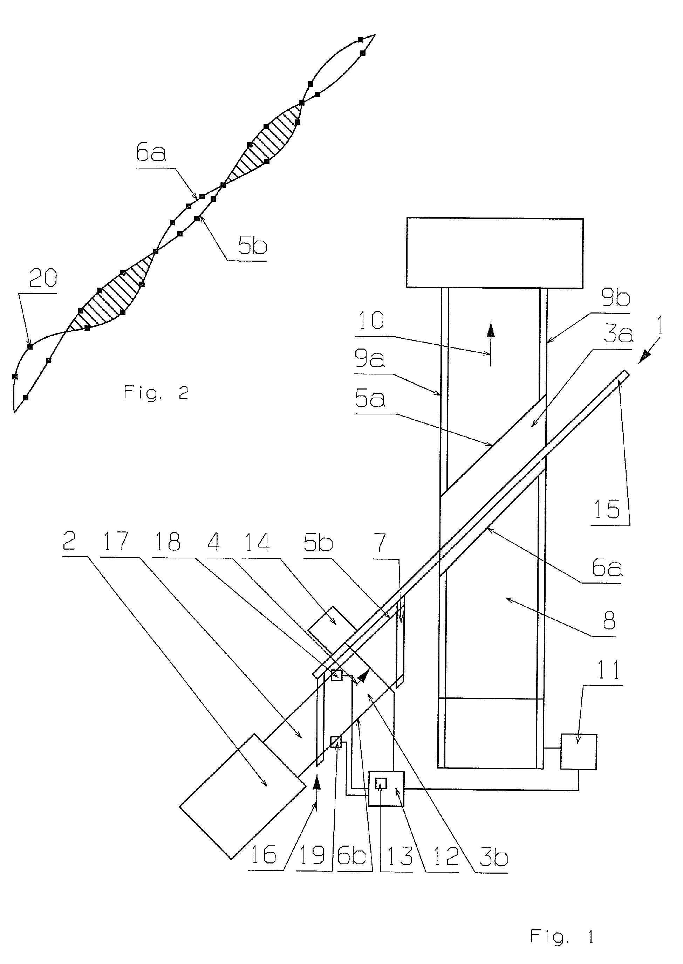

Fig. 1 zeigt in stark schematisierter Form eine Vorrichtung 1 zum Erzeugen eines Geleges, im vorliegenden Fall eines Monoaxial-Geleges.

Ein Monoaxial-Gelege ist ein Flächengebilde, in dem eine Vielzahl von Fasern oder Filamenten im Wesentlichen parallel zueinander, also in die gleiche Richtung, ausgerichtet sind und nebeneinander angeordnet werden. In Richtung dieser Fasern oder Filamente hat das Gelege eine relativ hohe Belastbarkeit gegen Zugkräfte. Wenn eine Belastbarkeit auch in andere Richtungen gewünscht wird, legt man mehrere derartiger Gelege übereinander, wobei sich dann die Richtungen der Fasern oder Filamente voneinander unterscheiden. Im vorliegenden Ausführungsbeispiel wird nur eine einzige Lage des Geleges erzeugt mit in eine Richtung ausgerichteten Fasern, insbesondere Kohlefasern.

Die Vorrichtung 1 weist eine Bandabschnittzuführeinrichtung 2 auf, aus der Bandabschnitte 3a, 3b entnommen werden können. Dargestellt sind lediglich zwei Bandabschnitte 3a, 3b. Es ist für den Fachmann jedoch ohne weiteres ersichtlich, dass man eine Vielzahl von Bandabschnitten 3a, 3b aus der Bandabschnittzuführeinrichtung entnehmen kann.

Die Ausbildung der Bandabschnittzuführeinrichtung 2 kann auf verschiedene Weise realisiert werden. So können die Bandabschnitte 3a, 3b von einer Rolle abgezogen und abgetrennt werden, auf der ein Bandmaterial aus den entsprechend ausgerichteten Fasern aufgewickelt ist. Es ist auch möglich, ein Band on-line zu erzeugen, indem man beispielsweise Faserbündel zu Bändchen ausbreitet und mehrere Bändchen nebeneinander führt, bis ein Band einer gewünschten Breite entstanden ist. Die Bandabschnitte 3a, 3b können auch vorgefertigt in einem Magazin bereit gehalten werden.

Die Bandabschnitte 3a, 3b weisen eine Bandrichtung 4 auf. Die Fasern des Bandabschnitts 3a, 3b sind in Bandrichtung 4 ausgerichtet. Ferner weisen die Bandabschnitte 3a, 3b eine Vorderkante 5a, 5b und eine Hinterkante 6a, 6b auf.

Ein Leger 7 ist vorgesehen, um einen Bandabschnitt 3b zu erfassen und ihn von der Bandabschnittzuführeinrichtung 2 zu einer Fördereinrichtung 8 zu transportieren. Die Fördereinrichtung 8 weist im vorliegenden Fall zwei parallel verlaufende Transportketten 9a, 9b auf, die in eine Transportrichtung 10 bewegbar sind. Die Bewegung kann kontinuierlich mit konstanter Geschwindigkeit oder mit variabler Geschwindigkeit erfolgen. Die Transportketten 9a, 9b können auch intermittierend bewegt werden. Es sollte aber auf jeden Fall auf einen Gleichlauf der beiden Transportketten 9a, 9b geachtet werden.

Die Transportketten 9a, 9b werden durch einen Antrieb 11 angetrieben. Der Antrieb 11 ist mit einer Steuereinrichtung 12 verbunden, die einen Speicher 13 aufweist.

Die Bewegung des Legers 7 wird durch einen Legerantrieb 14 gesteuert, der den Leger 7 auf einer Schiene 15 in Bandrichtung 4 hin und her bewegen kann. In vielen Fällen wird mehr als eine Schiene 15 vorgesehen sein. Weitere Schienen sind aber aus Gründen der Übersichtlichkeit nicht dargestellt. Auch der Legerantrieb 14 ist mit der Steuereinrichtung 12 verbunden.

Eine durch einen Pfeil symbolisierte Trenneinrichtung 16 trennt die Bandabschnitte 3a, 3b von einem Band 17 ab, das von der Bandabschnittzuführeinrichtung 2 ausgegeben wird. Wenn die Bandabschnitte 3a, 3b bereits abgetrennt vorliegen, dann kann die Bandabschnittzuführeinrichtung 2 auch als Magazin ausgebildet sein.

Die Steuereinrichtung 12 ist ferner mit einer Vorderkantenverlaufsmesseinrichtung 18 und mit einer Hinterkantenverlaufsmessvorrichtung 19 verbunden. Die Vorderkantenverlaufsmessvorrichtung 18 ermittelt den Verlauf der Vorderkante 5a, 5b der Bandabschnitte 3a, 3b. Die Hinterkantenverlaufsmessvorrichtung 19 ermittelt den Verlauf der Hinterkanten 6a, 6b der Bandabschnitte 3a, 3b.

Die Vorderkantenverlaufsmessvorrichtung 18 und die Hinterkantenverlaufsmessvorrichtung 19 sind in gewissem Umfang parallel zur Transportrichtung 10 verstellbar, so dass man sie an unterschiedliche Nennbreiten der Bandabschnitte 3a, 3b anpassen kann. Die Breite der Bandabschnitte 3a, 3b ist die Erstreckung parallel zur Transportrichtung 10. Im Übrigen sind die Vorderkantenverlaufsmessvorrichtung 18 und die Hinterkantenverlaufsmessvorrichtung 19 stationär angeordnet. Sie ermitteln den Verlauf der Vorderkante 5a, 5b bzw. den Verlauf der Hinterkante 6a, 6b, während der Leger 7 den Bandabschnitt 3a, 3b von der Bandabschnittzuführeinrichtung 2 zur Fördereinrichtung 8 bewegt. Dabei überstreicht die Vorderkante 5a, 5b die Vorderkantenverlaufsmessvorrichtung 18 und die Hinterkante 6a, 6b überstreicht die Hinterkantenverlaufsmessvorrichtung 19.

Die Hinterkantenverlaufsmessvorrichtung 19 ist mit dem Speicher 13 in der Steuereinrichtung 12 verbunden, so dass man beispielsweise den Verlauf der Hinterkante 6a eines bereits abgelegten ersten Bandabschnitts 3a im Speicher 13 zur Verfügung hat und zwar solange, bis man auch den Verlauf der Vorderkante 5b des zweiten Bandabschnitts 3b zu einem späteren Zeitpunkt ermittelt hat. Auf diese Weise ist es möglich, den Verlauf der Hinterkante 6a des ersten Bandabschnitts 3a und den Verlauf der Vorderkante 5b des zweiten Bandabschnitts 3b in einer gewünschten Weise miteinander in Übereinstimmung zu bringen.

Fig. 2 zeigt schematisch und in stark übertriebener Form den Verlauf der Hinterkante 6a des ersten Bandabschnitts 3a und den Verlauf der Vorderkante 5b des zweiten Bandabschnitts 3b. Schraffierte Bereiche sollen dabei eine Überdeckung der beiden Bandabschnitte 3a, 3b darstellen. Freigelassene Bereiche zwischen der Hinterkante 6a und der Vorderkante 5b sollen Lücken anzeigen.

Dargestellt sind mehrere Stützstellen 20. Der Verlauf der Vorderkante 5b und der Verlauf der Hinterkante 6a wird zweckmäßigerweise nicht kontinuierlich ermittelt, sondern in Gestalt von mehreren Stützstellen 20. Die Anzahl der Stützstellen 20 richtet sich unter anderem nach dem verwendeten Material und der zu erwartenden Unregelmäßigkeit der Vorderkante 5b und der Hinterkante 6a. In vielen Fällen wird es ausreichen, Stützstellen 20 in einem Abstand entlang der Vorderkante 5b bzw. der Hinterkante 6a in der Größenordnung von wenigen Zentimetern zu wählen, beispielsweise 1, 2, 3, 4, 5, 6, 7, 8, 9 oder 10 cm.

Es ist zwar zweckmäßig, aber nicht unbedingt erforderlich, die Stützstellen 20 in regelmäßigen Abständen anzuordnen.

Vorteilhafterweise werden jedoch die Stützstellen 20 an der Hinterkante 6a und an der Vorderkante 5b quer zur Transportrichtung 10 immer an der gleichen Stelle ermittelt, d.h. die einander zugeordneten Stützstellen 20 an der Vorderkante 5b und an der Hinterkante 6a liegen in Transportrichtung hintereinander. Dies erleichtert die nachfolgende Auswertung des Verlaufs der Vorderkante 5b und des Verlaufs der Hinterkante 6a. Man kann sich darauf beschränken, die einzelnen Stützstellen 20 miteinander in Beziehung zu setzen.

Für diese Beziehung gibt es verschiedene Möglichkeiten, die vorgegeben werden können.

Eine Möglichkeit besteht darin, die beiden Bandabschnitte 3a, 3b ohne jegliche Überlappung anzuordnen. In diesem Fall nimmt man in Kauf, dass sich zwischen den beiden Bandabschnitten 3a, 3b Lücken ergeben.

Eine andere Möglichkeit besteht darin, die beiden Bandabschnitte 3a, 3b ohne jegliche Lücke nebeneinander abzulegen. In diesem Fall nimmt man in Kauf, dass sich gewisse Überdeckungen zwischen den beiden Bandabschnitten 3a, 3b ergeben.

Eine dritte Möglichkeit besteht darin, die Fläche der Lücken und die Fläche der Überlappungen etwa gleich groß zu machen, wie dies schematisch in Fig. 2 dargestellt ist. Eine einfache Möglichkeit, um dies zu realisieren, ist die Verwendung einer virtuellen Vorderkante und die Verwendung einer virtuellen Hinterkante. Die virtuelle Vorderkante wird so gelegt, dass die reale Vorderkante 5b beidseits der virtuellen Vorderkante verläuft und zwar dergestalt, dass die Flächen zwischen der virtuellen Vorderkante und der realen Vorderkante 5b auf beiden Seiten der virtuellen Vorderkante gleich groß sind. In gleicher Weise kann man bei der Hinterkante 6a vorgehen. Auch hier wird eine virtuelle Hinterkante so gelegt, dass die Flächen zwischen der virtuellen Hinterkante und der realen Hinterkante 6a auf beiden Seiten der virtuellen Hinterkante gleich groß sind. Der Bandabschnitt 3b wird dann so auf den Transportketten 9a, 9b abgelegt, dass die virtuelle Vorderkante Bandabschnitt 3b und die virtuelle Hinterkante Bandabschnitt 3a übereinstimmen. Wenn man Stützstellen 20 verwendet, kann man die virtuelle Vorderkante oder die virtuelle Hinterkante so legen, dass die Summe der Abstände der Stützstellen von der jeweiligen Kante gleich Null ist, wobei Abstände in eine Richtung positiv und in der anderen Richtung negativ zählen.

Um eine Übereinstimmung zwischen virtueller Vorderkante und virtueller Hinterkante zu erzielen, kann man unterschiedliche Vorgehensweisen wählen.

Eine Möglichkeit besteht darin, die Transportketten 9a, 9b so anzutreiben, dass der erste Bandabschnitt 3a bei einer Bewegung des Legers 7 zum Heranführen des zweiten Bandabschnitts 3b genau die Strecke zurückgelegt worden ist, die man zur Positionierung des Bandabschnitts 3b benötigt. Eine andere Möglichkeit besteht darin, die Geschwindigkeit des Legers 7 so zusteuern, dass man bei einer mit konstanter Geschwindigkeit arbeitenden Fördereinrichtung den zweiten Bandabschnitt 3b positionsrichtig ablegen kann. Man kann auch beide Vorgehensweisen miteinander kombinieren.

Schließlich ist es auch möglich, den zweiten Bandabschnitt 3b über die Fördereinrichtung 8 zu bewegen und dann die Fördereinrichtung 8 so zu steuern, dass der erste Bandabschnitt 3a weit genug vorgefahren wird, um den zweiten Bandabschnitt 3b in gewünschter Weise ablegen zu können.

Eine Breitenmessung der Bandabschnitte ist in keinem Fall erforderlich oder gewünscht. Man beschränkt sich lediglich auf die Verwendung des Verlaufs der Vorderkanten 5a, 5b und der Hinterkanten 6a, 6b. Dabei werden der Verlauf der Vorderkante und der Verlauf der Hinterkante eines einzelnen Bandabschnitts nicht gleichzeitig verwendet.

Die Vorderkantenverlaufsmessvorrichtung 18 und die Hinterkantenverlaufsmessvorrichtung 19 sind als berührungslos arbeitende Messinstrumente oder Sensoren ausgebildet. Sie arbeiten vorzugsweise optisch, beispielsweise in Gestalt von Zeilenkameras oder Scanner.

Wenn anstelle des dargestellten Monoaxial-Geleges ein Multiaxial-Gelege erzeugt werden soll, werden weitere Leger 7 verwendet, deren Bewegungsrichtung einen anderen Winkel mit der Transportrichtung 10 einschließt.

## Patentansprüche

1. Verfahren zum Erzeugen eines Geleges, bei dem man mehrere Bandabschnitte (3a, 3) nebeneinander auf einer Fördereinrichtung (8) ablegt, die sich zumindest zeitweilig in eine Transportrichtung (10) bewegt, wobei die Transportrichtung (10) mit einer Bandrichtung (4) einen vorbestimmten Winkel einschließt, wobei jeder Bandabschnitt (3a, 3b) eine in Bandrichtung (4) verlaufende Vorderkante (5a, 5b) und eine in Bandrichtung (4) verlaufende Hinterkante (6a, 6b) aufweist und man die Bandabschnitte (3a, 3b) so ablegt, dass die Hinterkante (6a) eines ersten Bandabschnitts (3a) und die Vorderkante (5b) eines zweiten Bandabschnitts (3b) benachbart sind, **dadurch gekennzeichnet, dass** man einen Hinterkantenverlauf des ersten Bandabschnitts (3a) und einen Vorderkantenverlauf des zweiten Bandabschnitts (3b) ermittelt und den zweiten Bandabschnitt (3b) relativ zum ersten Bandabschnitt (3a) in Abhängigkeit von einer Beziehung zwischen dem Vorderkantenverlauf und dem Hinterkantenverlauf auf der Fördereinrichtung (8) ablegt.

2. Verfahren nach Anspruch 1, **dadurch gekennzeichnet, dass** man den Vorderkantenverlauf und/oder den Hinterkantenverlauf als Differenz zu einer in Bandrichtung verlaufenden Linie ermittelt.

3. Verfahren nach Anspruch 2, **dadurch gekennzeichnet, dass** man den Vorderkantenverlauf und/oder den Hinterkantenverlauf jeweils in Form von Stützstellen (20) ermittelt.

4. Verfahren nach Anspruch 3, **dadurch gekennzeichnet, dass** man die Stützstellen (20) an der Vorderkante (5b) und an der Hinterkante (6a) jeweils an gleichen Positionen in eine Richtung quer zur Transportrichtung (10) ermittelt.

5. Verfahren nach einem der Ansprüche 1 bis 4, **dadurch gekennzeichnet, dass** man als Beziehung eine minimale Flächendifferenz zwischen dem Vorderkantenverlauf und dem Hinterkantenverlauf verwendet.

6. Verfahren nach einem der Ansprüche 1 bis 5, **dadurch gekennzeichnet, dass** man den Vorderkantenverlauf und/oder den Hinterkantenverlauf beim Führen des Bandabschnitts (3a, 3b) zu der oder über die Fördereinrichtung ermittelt.

7. Verfahren nach einem der Ansprüche 1 bis 6, **dadurch gekennzeichnet, dass** man den Vorderkantenverlauf und den Hinterkantenverlauf eines Bandabschnitts gleichzeitig ermittelt und zumindest zeitweilig speichert.

8. Vorrichtung zum Erzeugen eines Geleges mit einer in eine Transportrichtung (10) bewegbaren Fördereinrichtung (8), einer Bandabschnittzuführeinrichtung (2) und einem Leger (7), der Bandabschnitte (3a, 3b) aus der Bandabschnittzuführeinrichtung (2) entnimmt, in einer Bandrichtung (4), die mit der Transportrichtung (10) einen vorbestimmten Winkel einschließt, über die Fördereinrichtung (8) führt und auf der Fördereinrichtung (8) in Transportrichtung (10) nebeneinander ablegt, **dadurch gekennzeichnet, dass** eine Vorderkantenverlaufsmessvorrichtung (18), die einen Vorderkantenverlauf eines Bandabschnitts (3a, 3b) ermittelt, und eine Hinterkantenverlaufsmessvorrichtung (19), die einen Hinterkantenverlauf eines Bandabschnitts (3a, 3b) ermittelt, mit einer Antriebssteuerung (12) verbunden sind, die eine Bewegung der Fördereinrichtung (8) und/oder eine Bewegung des Legers (7) in Abhängigkeit von einer Beziehung zwischen dem Vorderkantenverlauf und dem Hinterkantenverlauf steuert.

9. Vorrichtung nach Anspruch 8, **dadurch gekennzeichnet, dass** die Vorderkantenverlaufsmessvorrichtung (18) und/oder die Hinterkantenverlaufsmessvorrichtung (19) zwischen der Bandabschnittszuführeinrichtung (2) und der Fördereinrichtung (8) angeordnet ist.

10. Vorrichtung nach Anspruch 8 oder 9, **dadurch gekennzeichnet, dass** die Vorderkantenverlaufsmessvorrichtung (18) und/oder die Hinterkantenverlaufsmessvorrichtung (19) als berührungslos arbeitende Messvorrichtung ausgebildet ist.

11. Vorrichtung nach einem der Ansprüche 8 bis 10, **dadurch gekennzeichnet, dass** die Vorderkantenverlaufsmessvorrichtung (18) und/oder die Hinterkantenverlaufsmessvorrichtung (19) mit einer Speichereinrichtung (13) verbunden ist.

12. Vorrichtung nach einem der Ansprüche 8 bis 11, **dadurch gekennzeichnet, dass** die Vorderkantenverlaufsmessvorrichtung (18) und/oder die Hinterkantenverlaufsmessvorrichtung (19) in Transportrichtung (109 verstellbar ist.

## Claims

1. Method for producing a scrim in which several band sections (3a, 3b) are deposited next to one another on a conveyor device (8) that at least temporarily moves in a direction of transport (10), the direction of transport (10) being oriented at a predetermined angle to a band direction (4) and each band section (3a, 3b) having a front edge (5a, 5b) running in the band direction (4) and a rear edge (6a, 6b) running in the band direction (4), and the band section (3a, 3b) are placed so that the rear edge (6a) of a first band section (3a) is adjacent the front edge (5b) of a second band section (3b), **characterized in that**, a rear-edge shape of the first band section (3a) and a front-edge shape of the second band section (3b) are determined, and the second band section (3a, 3b) is placed on the conveyor device (8) relative to the first band section (3a, 3b) as a function of a relation between the front-edge shape and the rear-edge shape.

2. Method according to claim 1, **characterized in that** the front-edge shape and/or the rear-edge shape is determined as the difference from a line running in the band direction (4).

3. Method according to claim 2, **characterized in that** the front-edge shape and/or the rear-edge shape is determined at respective sampling points (20).

4. Method according to claim 3, **characterized in that** the sampling points (20) at the front edge (5a, 5b) and at the rear edge (6a, 6b) are calculated respectively in identical positions in a direction crosswise to the direction of transport (10).

5. Method according to any of claims 1 to 4, **characterized in that** the relation is a minimal area difference between the front-edge shape and the rear-edge shape.

6. Method according to any of claims 1 to 5, **characterized in that** at least one of the front-edge shape and the rear-edge shape is determined as the band section (3a, 3b) is guided to or over the conveyor device (8).

7. Method according to any of claims 1 to 6, **characterized in that** calculating the front-edge shape and the rear-edge shape of a band section (3a, 3b) are determined simultaneously and at least temporarily saved.

8. Apparatus for producing a scrim comprising a conveyor device (8) movable in a direction of transport (10), a band section feeder device (2) and a placer (7) removing band sections (3a, 3b) from the band section feeder device (2), guiding the band sections (3a, 3b) over the conveyor device (8) in a band direction (4) oriented a predetermined angle to the direction of transport (10), and depositing the band sections (3a, 3b) next to one another on the conveyor device (8) in the direction of transport (10), **characterized in that** a front-edge shape measuring device (18) determining a front-edge shape of a band section (3a, 3b), and a rear-edge shape measuring device (19) determining a rear-edge shape of a band section (3a, 3b), are connected to a drive control (12) controlling a movement of the conveyor device (8) and/or the placer (7) as a function of a relation between the front-edge shape and/or the rear-edge shape.

9. Apparatus according to claim 8, **characterized in that** the front-edge shape measuring device (18) and/or the rear-edge shape measuring device (19) is arranged between the band section (3a, 3b) feeder device and the conveyor device (8).

10. Apparatus according to claim 8 or 9, **characterized in that** the front-edge shape measuring device (18) and/or the rear-edge shape measuring device (19) is embodied as a contactlessly operating measuring device.

11. Apparatus according to any of claims 8 to 10, **characterized in that** the front-edge shape measuring device (18) and/or the rear-edge shape measuring device (19) is connected to a memory device (13).

12. Apparatus according to any of claims 8 to 11, **characterized in that** the front-edge shape measuring device (18) and/or the rear-edge shape measuring device (19) is displaceable in the direction of transport (10).

## Revendications

1. Procédé de fabrication d'un non-tissé, selon lequel on dépose plusieurs tronçons de bande (3a, 3) les uns à côté des autres sur un dispositif de transport (8) qui se déplace au moins temporairement dans une direction de transport (10), la direction de transport (10) formant avec une direction de bande (4) un angle prédéterminé, chaque tronçon de bande (3a, 3b) comportant un bord avant (5a, 5b) s'étendant dans la direction de bande (4) et un bord arrière (6a, 6b) s'étendant dans la direction de bande (4) et les tronçons de bande (3a, 3b) étant déposés de telle sorte que le bord arrière (6a) d'un premier tronçon de bande (3a) et le bord avant (5b) d'un deuxième tronçon de bande (3b) sont voisins, **caractérisé en ce que** l'on détermine un profil de bord arrière du premier tronçon de bande (3a) et un profil de bord avant du deuxième tronçon de bande (3b) et **en ce que** l'on dépose sur le dispositif de transport (8) le deuxième tronçon de bande (3b) par rapport au premier tronçon de bande (3a) en fonction d'une relation entre le profil de bord avant et le profil de bord arrière.

2. Procédé selon la revendication 1, **caractérisé en ce que** l'on détermine le profil de bord avant et/ou le profil de bord arrière en tant que différence par rapport à une ligne s'étendant dans la direction de bande.

3. Procédé selon la revendication 2, **caractérisé en ce que** l'on détermine le profil de bord avant et/ou le profil de bord arrière à chaque fois sous la forme de points d'appui (20).

4. Procédé selon la revendication 3, **caractérisé en ce que** l'on détermine les points d'appui (20) au niveau du bord avant (5b) et au niveau du bord arrière (6a) à chaque fois aux mêmes positions dans une direction transversale à la direction de transport (10).

5. Procédé selon l'une des revendications 1 à 4, **caractérisé en ce que** l'on utilise comme relation une différence de surface minimale entre le profil de bord avant et le profil de bord arrière.

6. Procédé selon l'une des revendications 1 à 5, **caractérisé en ce que** l'on détermine le profil de bord avant et/ou le profil de bord arrière lors du guidage du tronçon de bande (3a, 3b) en direction ou au-dessus du dispositif de transport.

7. Procédé selon l'une des revendications 1 à 6, **caractérisé en ce que** l'on détermine simultanément le profil de bord avant et le profil de bord arrière d'un tronçon de bande et **en ce que** l'on mémorise ceux-ci au moins temporairement.

8. Dispositif de fabrication d'un non-tissé avec un dispositif de transport (8) pouvant se déplacer dans une direction de transport (10), avec un dispositif d'amenée de tronçon de bande (2) et avec un dispositif poseur (7) qui prend les tronçons de bande (3a, 3b) sur le dispositif d'amenée de tronçon de bande (2), qui les guide au-dessus du dispositif de transport (8) dans une direction de bande (4) qui forme avec la direction de transport (10) un angle prédéterminé et qui les dépose les uns à côté des autres dans la direction de transport (10) sur le dispositif de transport (8), **caractérisé en ce qu'**un dispositif de mesure de profil de bord avant (18), qui détermine un profil de bord avant d'un tronçon de bande (3a, 3b), et un dispositif de mesure de profil de bord arrière (19), qui détermine un profil de bord arrière d'un tronçon de bande (3a, 3b), sont reliés à un dispositif d'entraînement (12) qui commande un déplacement du dispositif de transport (8) et/ou un déplacement du dispositif poseur (7) en fonction d'une relation entre le profil de bord avant et le profil de bord arrière.

9. Dispositif selon la revendication 8, **caractérisé en ce que** le dispositif de mesure de profil de bord avant (18) et/ou le dispositif de mesure de profil de bord arrière (19) sont agencés entre le dispositif d'amenée de tronçon de bande (2) et le dispositif de transport (8).

10. Dispositif selon la revendication 8 ou 9, **caractérisé en ce que** le dispositif de mesure de profil de bord avant (18) et/ou le dispositif de mesure de profil de bord arrière (19) sont conçus comme des dispositifs de mesure fonctionnant sans contact.

11. Dispositif selon l'une des revendications 8 à 10, **caractérisé en ce que** le dispositif de mesure de profil de bord avant (18) et/ou le dispositif de mesure de profil de bord arrière (19) sont reliés à un dispositif de mémorisation (13).

12. Dispositif selon l'une des revendications 8 à 11, **caractérisé en ce que** le dispositif de mesure de profil de bord avant (18) et/ou le dispositif de mesure de profil de bord arrière (19) sont déplaçables dans la direction de transport (109.
